(19) Europäisches Patentamt
European Patent Office
Office européen des brevets

(11) **EP 2 216 210 A2**

(12) **EUROPÄISCHE PATENTANMELDUNG**

(43) Veröffentlichungstag:
**11.08.2010 Patentblatt 2010/32**

(51) Int Cl.:
***B60R 21/13*** *(2006.01)*     ***F16B 2/14*** *(2006.01)*

(21) Anmeldenummer: **10152709.1**

(22) Anmeldetag: **04.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **04.02.2009 DE 102009000622**

(71) Anmelder: **Alutech Gesellschaft m.b.H.
5651 Lend (AT)**

(72) Erfinder:
• **Danninger, Christian
5204, Straßwalchen (AT)**
• **Garnweidner, Peter
5112, Lamprechtshausen (AT)**

(74) Vertreter: **Wilhelms · Kilian & Partner
Patentanwälte
Eduard-Schmid-Straße 2
81541 München (DE)**

(54) **Klemmmechanismus und Überrollschutz mit ausfahrbarem Überrollkörper**

(57)     Die Erfindung betrifft einen Klemmmechanismus (10) zum Verklemmen eines linear beweglichen Körpers (1), der eine Aufnahme (4, 4') zur Aufnahme des Körpers (1) und mindestens ein Klemmelement (12, 12') umfasst, das eine Vielzahl von Klemmabschnitten aufweist, wobei die Aufnahme (4, 4') einen keilförmigen Raum (14, 14') festlegt und die Klemmabschnitte des Klemmelements (12, 12') beim Verklemmen des Körpers (1) in Klemmeingriff mit dem Körper (1) und dem keilförmigen Raum (14, 14') treten, und das Klemmelement (12, 12') derart ausgebildet und in dem keilförmigen Raum (14, 14') gelagert ist, dass das Klemmelement (12, 12') beim Verklemmen des Körpers (1) Klemmkräfte in Normalenrichtung auf den Körper (1) ausübt, die sich zu einer resultierenden Gesamtkraft addieren, deren Betrag größer ist als der Betrag derjenigen Kraft, die in Normalenrichtung von dem keilförmigen Raum (14, 14') auf das Klemmelement (12, 12') ausgeübt wird. Die Erfindung betrifft ebenso einen Überrollschutz, insbesondere für ein Kraftfahrzeug, der einen Überrollkörper (1, 2), der in einer Ausfahrrichtung von einer eingefahrenen Stellung in eine ausgefahrene Stellung verschiebbar ist, und einen voranstehend beschriebenen Klemmmechanismus (10) zum Verklemmen des Überrollkörpers (1, 2) in der ausgefahrenen Stellung umfasst.

Fig. 4

**Beschreibung**

Die Erfindung betrifft allgemein einen Klemmmechanismus zum Verklemmen eines in axialer Richtung länglich ausgebildeten Körpers. Insbesondere betrifft die Erfindung einen Überrollschutz für ein Kraftfahrzeug mit einem ausfahrbaren Überrollkörper und einem Klemmmechanismus zum Verklemmen des Überrollkörpers in der ausgefahrenen Stellung.

Überrollschutzvorrichtungen, gewöhnlich auch als Überrollbügel bezeichnet, werden in Kraftfahrzeugen, wie z. B, Cabriolets, verwendet, um Insassen des Kraftfahrzeuges vor Kopfverletzungen im Falle eines Fahrzeugüberschlages zu schützen. Aus DE 43 42 401 A1 und DE 195 23 790 A1 ist es bekannt, Überrollbügel mit vorgespannten Federelementen auszustatten, die durch einen von einem Crashsensor angesteuerten Auslösemechanismus, wie z. B. einen Elektromagneten oder eine pyrotechnische Patrone, den Überrollbügel zum Schutz der Insassen des Fahrzeuges ausfahren.

Für eine Feststellung des ausgefahrenen Überrollbügels sind verschiedene Arten von Verriegelungs- bzw. Klemmmechanismen bekannt. Gemäß DE 197 50 457 A1 wird eine Zahnstange in Längsrichtung des Überrollbügels befestigt, in die eine Verriegelungskiinke eingreift und nach dem Ausfahren verhindert, dass der Überrolibügel wieder in die eingefahrene Stellung zurückkehrt.

Eine weitere Möglichkeit zum Feststellen des Überrollbügels besteht in der Verwendung eines Kugelschlosses. DE 43 42 401 A1 offenbart einen ausfahrbaren Überrollbügel, bei dem zur Feststellung des Überrollbügels Klemmkugeln in einen sich verjüngenden Abschnitt zwischen dem ausgefahrenen Bügelrohr des Überrollbügels und einer Führung gedrückt werden.

Nachteil der bekannten Verriegelungs- bzw, Klemmmechanismen ist, dass bei Verwendung einer Zahnstange mit einer Verriegelungsklinke die Verriegelungsklinke mit einer gewissen Anzahl von Zähnen in die Zahnstange eingreifen muss, um eine sichere Verriegelung des ausgefahrenen Überrollbügels zu gewährleisten. Ist dies nicht der Fall, z. B. bei einer Fehlfunktion in Form eines langsamen Ausfahrens des Überrolibügels, kann die Verriegelung unter Umständen nicht ausreichen und der Überrollbügel bei zu hoher Belastung wieder eingefahren werden.

Der in DE 43 42 401 A1 vorgeschlagene Klemmmechanismus weist den Nachteil auf, dass über die Klemmkugeln keine hinreichende Klemmkraft für eine sichere Verklemmung erreicht wird.

Es ist daher eine Aufgabe der Erfindung, einen verbesserten Klemmmechanismus vorzusehen, der insbesondere zur Verwendung bei einem Überrollschutz geeignet ist.

Diese Aufgabe wird durch einen Klemmmechanismus mit den Merkmalen des Patentanspruches 1 und durch einen Überrollschutz mit den Merkmalen des Patentanspruches 3 gelöst.

Hierfür umfasst der Überrollschutz einen Überrollkörper, der in einer Ausfahrrichtung von einer eingefahrenen Stellung in eine ausgefahrene Stellung verschiebbar ist, und einen Klemmmechanismus, welcher eine Aufnahme zur Aufnahme des Überrollkörpers und mindestens ein Klemmelement, das eine Vielzahl von Klemmabschnitten aufweist, wobei die Aufnahme einen keilförmigen Raum festlegt und die Klemmabschnitte des Klemmelements beim Verklemmen des Überrollkörpers in Klemmeingriff mit dem Überrollkörper und dem keilförmigen Raum treten, und das Klemmelement derart ausgebildet und in dem keilförmigen Raum gelagert ist, dass das Klemmelement beim Verklemmen des Überrollkörpers Klemmkräfte in Normalenrichtung auf den Überrollkörper ausübt, die sich zu einer resultierenden Gesamtkraft addieren, deren Betrag größer ist als der Betrag derjenigen Kraft, die in Normalenrichtung von dem keilförmigen Raum auf das Klemmelement ausgeübt wird.

Vorteilhaft an dem erfindungsgemäßen Überrollschutz ist, dass immer eine ausreichende Klemmkraft durch das Klemmelement auf den tragenden Überrollkörper übertragen wird, auch wenn Verunreinigungen oder Schmierstoffe in dem Klemmmechanismus vorhanden sind, denn die in Normalenrichtung auf den Überrollkörper wirkenden Klemmkräfte addieren sich zu einer Gesamtkraft, die immer größer ist als diejenige Kraft, die konstruktionsbedingt auf das Klemmelement wirkt. Dadurch spielt der Reibungskoeffizient zwischen Klemmelement und Überrollkörper, der bei herkömmlichen Klemmmechanismen die Höhe der auf den Über-rollkörper wirkenden Klemmkraft mitbestimmt, eine eher untergeordnete Rolle. Sollte die auf das Klemmelement, beispielsweise einen Klemmkeil, wirkende Klemmkraft noch eine Relativbewegung zwischen Klemmelement und dem das Klemmelement umgebende Gehäuse gestatten, wirkt erfindungsgemäß bereits eine resultierende Klemmkraft auf den Überrollkörper, die ein Verklemmen des Überrollkörpers sicherstellt. Dies wird dadurch erreicht, dass die in Normalenrichtung auf den Überrollkörper wirkenden Klemmkräfte sich zu einer resultierenden Gesamtkraft addieren, deren Betrag größer ist als der Betrag derjenigen Kraft, die auf das Klemmelement wirkt. Das Klemmelement wirkt quasi als "Kraftverstärker", wobei der Verstärkungsfaktor von der Geometrie, d.h. den Winkelverhältnissen des Klemmelements und des Raumes, in dem das Klemmelement untergebracht ist, abhängt.

Weitere bevorzugte Ausgestaltungen und Weiterbildungen des Klemmmechanismus und des Überrollschutzes sind Gegenstand der Unteransprüche 2 und 4 bis 15.

Unter Bezugnahme auf die beigefügten Zeichnungen werden bevorzugte Ausführungsformen des Überrollschutzes beschrieben.

Fig. 1 zeigt einen erfindungsgemäßen Überrollschutz in einem Längsschnitt.

Fig. 2 zeigt einen weiteren erfindungsgemäßen Überrollschutz in einem Längsschnitt.

Fig. 3 zeigt einen Längsschnitt durch ein doppelkeilförmiges Klemmelement und das entsprechende Kräftediagramm.

Fig. 4 zeigt einen Querschnitt durch das in Fig. 3 dargestellte doppelkeilförmige Klemmelement und das entsprechende Kräftediagramm.

Fig. 5a zeigt einen Querschnitt durch ein doppelkeilförmiges Klemmelement gemäß einer ersten Ausführungsform der Erfindung in Wechselwirkung mit einem Überrollkörper.

Fig. 5b zeigt einen Querschnitt durch ein doppelkeilförmiges Klemmelement gemäß einer zweiten Ausführungsform der Erfindung in Wechselwirkung mit einem Überrollkörper.

Fig. 5c zeigt einen Querschnitt durch ein asymmetrisch ausgebildetes, doppelkeilförmiges Klemmelement gemäß einer dritten Ausführungsform der Erfindung in Wechselwirkung mit einem Überrollkörper.

Fig. 6 zeigt einen Querschnitt eines Klemmelementes gemäß einer weiteren Ausführungsform der Erfindung in Wechselwirkung mit einem Überrollkörper.

Fig. 7 zeigt einen Querschnitt eines Klemmelementes gemäß einer weiteren Ausführungsform der Erfindung in Wechselwirkung mit einem Überrollkörper.

Fig. 8 zeigt einen Querschnitt eines Klemmelementes gemäß einer weiteren Ausführungsform der Erfindung in Wechselwirkung mit einem Überrollkörper.

Fig, 9 zeigt einen Querschnitt und einen Längsschnitt durch einen Klemmmechanismus gemäß einer Ausführungsform der Erfindung zum Verklemmen eines als Flachprofil ausgebildeten Überrollkörpers.

Fig. 10 zeigt den in Fig. 2 gezeigten Überrollschutz in einem Querschnitt.

Fig. 11 zeigt einen Querschnitt durch einen als Strangpressprofil ausgebildeten Überrollschutz mit einem Klemmmechanismus gemäß einer Ausführungsform der Erfindung.

Fig. 12 zeigt einen Querschnitt durch einen Klemmmechanismus gemäß einer weiteren Ausführungsform der Erfindung.

Sämtliche der im Anschluss beschriebenen Klemmmechanismen werden beispielhaft im Zusammenhang mit einem Überrollschutz für ein Kraftfahrzeug beschrieben. Diese Klemmmechanismen können allerdings auch überall dort eingesetzt werden, wo Bauteile eines Kraftfahrzeuges zur Gefahrenvermeidung oder Energieabsorption verfahren und in der aus- bzw. eingefahrenen Stellung verklemmt werden. Beispielsweise können derartige Klemmmechanismen an Stoßfängern eines Kraftfahrzeuges eingesetzt werden. Der Stoßfänger wird im Kollisionsfall blitzschnell ausgefahren und in dieser Stellung verklemmt, um so mehr Energie bei der Kollision absorbieren zu können. Ebenso können die hier beschriebenen Klemmmechanismen zur Verklemmung der Lenksäule eines Lenkrades in der eingefahrenen Stellung benutzt werden.

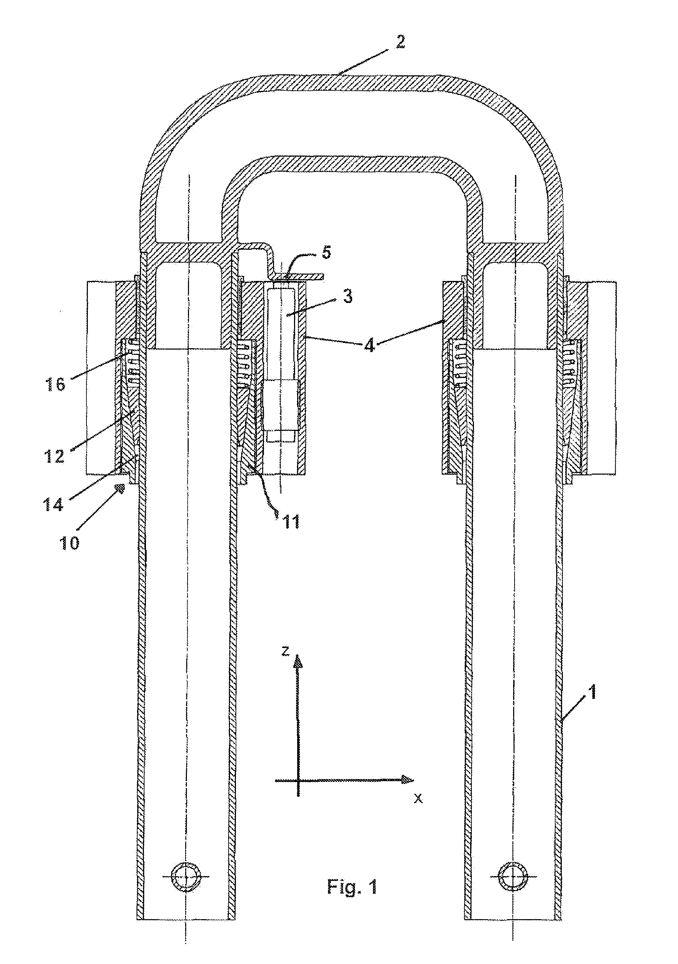

Fig. 1 zeigt einen Längsschnitt durch einen Überrollschutz mit einem Überrollkörper 1, 2 und einem Klemmmechanismus 10. Der Überrollschutz umfasst einen Überrollbügel bzw. Überrollkörper, der zwei Rohre 1 und einen die beiden Rohre verbindenden Querbügel 2 aufweist. Die Rohre 1 dienen als Führungsrohre bzw. Trägerrohre. Der Überrollkörper kann anders als dargestellt auch aus nur einem Rohr bzw. Trägerelement aufgebaut sein. Sämtliche Elemente, d.h. die Rohre 1 und der Querbügel 2, können die gleiche Wandstärke aufweisen. Je nach Beanspruchung und Richtung der aufzunehmenden Kräfte können die Rohre 1 und der Querbügel 2 aus unterschiedlichen oder gleichen Materialen hergestellt sein. Zu diesem Zweck sind Metalle, wie z.B. Aluminium, Magnesium oder Legierungen dieser Metalle oder Stahl besonders geeignet. Es können aber auch Kunststoffe, wie z.B. Karbon oder Faserverbundwerkstoffe, die die benötigten mechanischen Eigenschaften aufweisen, verwendet werden. Diese Materialkombinationen sind für alle im Folgenden beschriebenen Ausführungsformen wählbar.

Der in Fig. 1. gezeigte Überrollbügel ist gewöhnlich hinter einem Insassensitz eines Kraftfahrzeuges angeordnet und schützt den Insassen vor Kopfverletzungen im Falle eines Überschlags des Kraftfahrzeuges. Es ist jedoch auch möglich, auf jeder Seite des Fahrzeuges ein Rohr 1 anzuordnen und den Querbügel 2 so zu dimensionieren, dass er über die vollständige Fahrzeugbreite reicht und der Überrollbügel alle in dem Fahrzeug sitzenden Insassen vor Kopfverletzungen schützt.

Zur mittel- oder unmittelbaren Befestigung des Überrollbügels 1, 2 am Fahrzeug sind Aufnahmen 4 vorgesehen, in die die Rohre 1 eingesetzt sind und von einer in Fig. 1 gezeigten eingefahrenen Position in eine ausgefahrene Position ausgefahren werden können.

Als Antriebsmittel ist in der Fig. 1 ein pyrotechnischer Aktuator 3 vorgesehen, der nach Detektion eines Überschlages durch eine entsprechende Sensorik den Überrollkörper von der eingefahrenen Position entlang der in Fig. 1 gezeigten z-Richtung (Ausfahrrichtung) in die ausgefahrene Position verschiebt. Hierfür ist der pyrotechnische Aktuator 3 in dem Aufnahmeelement 4 angeordnet, wobei dessen Stellglied 5, das den Überrollkörper ausfährt, an einem Abschnitt des Überrollkörpers 1 angreift.

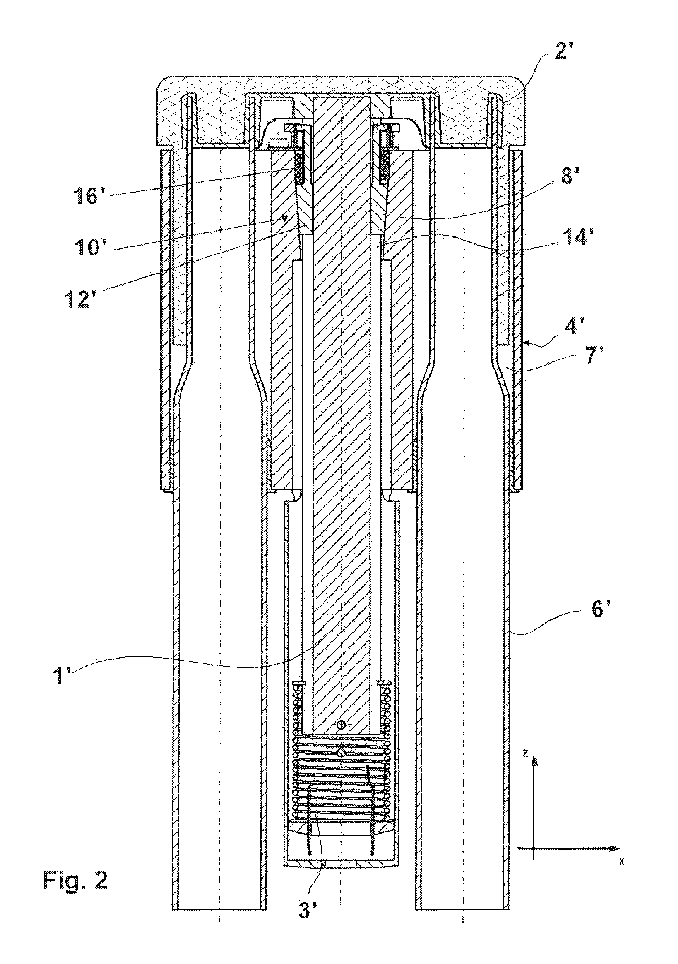

In Fig. 2 ist ein weiterer Überrollbügel im Längsschnitt dargestellt. Der Überrollkörper weist ein länglich ausgebildetes Trägerrohr 1' und einen darauf aufgesetzten Querträger 2' auf, die zusammengesetzt eine T-Form ergeben. Der Querträger 2' und das Trägerrohr 1' können wiederum einteilig oder als ineinander gesteckte Elemente ausgestaltet sein.

Zur mittel- oder unmittelbaren Befestigung des Überrollbügels an einem Fahrzeug umfasst dieser ebenfalls ein Aufnahmeelement 4', in das der Überrollkörper eingesetzt ist und in der in Fig. 2 gezeigten z-Richtung von einer eingefahrenen Stellung in eine ausgefahrene Stellung verschoben werden kann.

Der in Fig.2 dargestellte Überrollbügel umfasst im Gegensatz zu der Ausbildung in Fig. 1 als Antriebsmittel eine vorgespannte Feder 3', die im Falle der Detektion eines Überschlages durch eine nicht gezeigte Vorrichtung freigegeben wird und das Trägerrohr bzw. den Überrollkörper in die ausgefahrene Stellung katapultiert.

Das Antriebsmittel 3' ist aber nicht auf die in Fig.1 und 2 dargestellten Varianten begrenzt. Ebenfalls könnte eine Gasfeder oder ein anderes Antriebsmittel zum Einsatz kommen.

Der in Fig. 2 gezeigte Überrollschutz umfasst ferner zwei Führungsrohre 6', die eine Führung des Überrollkörpers während der Ausfahrbewegung sicherstellen. Für diese Führung sind in dem Aufnahmeelement 4' zwei Durchgänge 7' ausgebildet, in die die Führungsrohre 6' beweglich eingesetzt sind. Wie aus einem Vergleich zwischen Fig. 1 und Fig. 2 ersichtlich ist, kann das Aufnahmeelement 4, 4' sowohl einteilig als auch mehrteilig ausgeführt sein.

Die Führungsrohre 6' können zwar keine Kräfte in z-Richtung aufnehmen, dienen aber als Stabilitätselemente zur Aufnahme von Kräften in x-Richtung und y-Richtung (senkrecht zur Papierebene), d.h. in Fahrtrichtung und quer hierzu, die zu Biegebeanspruchungen führen.

Zur Feststellung des Überrollkörpers nach Erreichen der ausgefahrenen Stellung weist der Überrollbügel einen Verriegelungs- bzw. Klemmmechanismus 10' auf. In Fig. 1 ist jedem Bügelrohr 1 jeweils ein Klemmmechanismus 10 zugeordnet, während in Fig. 2 nur ein einziger Klemmmechanismus 10' vorgesehen ist.

Der Klemmmechanismus 10, 10' umfasst mindestens ein Klemmelement 12, 12', das in einen sich in negativer z-Richtung (Richtung entgegengesetzt zur Ausfahrrichtung) verjüngenden Raum 14, 14' eingesetzt ist, der durch eine in das Aufnahmeelement geschraubte Hülse 11 (Fig. 1) oder durch einen in dem Aufnahmeelement 4' ausgebildeten Abschnitt 8' (Fig. 2) festgelegt ist. Um das Klemmelement 12, 12' ortsfest zu halten, ist mindestens ein Federelement 16, 16' vorgesehen, das das Klemmelement 12, 12' in den sich verjüngenden Raum 14, 14' drückt.

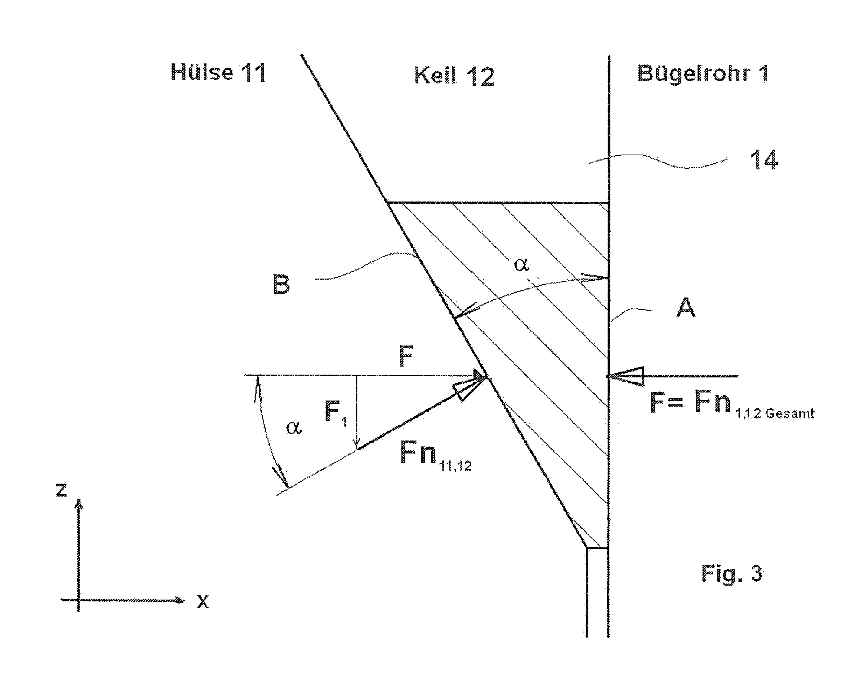

Unter Bezugnahme auf die Fig. 3 wird die kräftemäßige Wechselwirkung zwischen den einzelnen Bauteilen des Klemmmechanismus 10, 10' und dem Trägerrohr bzw. Bügelrohr 1 beschrieben. Fig. 3 stellt beispielhaft einen Längsschnitt durch den in Fig. 1 dargestellten Klemmmechamsmus 10 dar und zeigt das Kräftediagramm der beim Verklemmen des Bügelrohrs 1 mittels des Klemmelements 12 auftretenden Kräfte.

In Fig. 3 sind das Trägerrohr 1, das Klemmelement 12, das hier als Keil ausgebildet ist, und der sich verjüngende Abschnitt 11 (Hülse in Fig. 1) in einem Längsschnitt entlang der z-Richtung (Ausfahrrichtung des Überrollkörpers) gezeigt. Das Klemmelement 12 liegt mit einer Seitenfläche A (im Folgenden Rohrseite genannt) an dem Trägerrohr 1 und mit einer gegenüberliegenden Seitenfläche B (im Folgenden Hülsenseite genannt) an der verjüngt ausgebildeten Hülse 11 an. Die Rohrseite A und die Hülsenseite B schließen einen Winkel $\alpha$ ein.

Im Hinblick auf eine ausfallsichere Funktionsweise des Klemmmechanismus 10 ist es von Bedeutung, dass die in Normalenrichtung wirkende Kraft $Fn_{1,\,12Gesamt}$ zwischen dem Trägerrohr 1 und dem Klemmelement 12 größer ist als die in Normalenrichtung $Fn_{11,\,12}$ wirkende Kraft zwischen dem Klemmelement 12 und der Hülse 11. Die jeweils in Normalenrichtung wirkenden Kräfte $Fn_{11,\,12}$ und $Fn_{1,\,12Gesamt}$ beeinflussen wiederum die zwischen dem Klemmelement 12 und der Hülse 11 und dem Klemmelement 12 und dem Trägerrohr 1 auftretenden Reibungskräfte. Hierdurch wird erreicht, dass eine Relativbewegung zwischen dem Trägerrohr 1 und dem Klemmelement 12 unterbunden ist, selbst wenn das Klemmelement 12 sich noch entlang der Hülse 11 verschieben kann.

Die Reibungskraft zwischen den einzelnen Elementen ergibt sich bekanntermaßen aus dem Produkt des Reibungskoeffizienten und der auftretenden Normalkraft, Das bedeutet, dass die Reibungskraft zwischen der Hülse 11 und dem Klemmelement bzw. Keil 12 sich aus dem Produkt der Normalkraft $Fn_{11,\,12}$ und dem Reibungskoeffizient $\mu_{11,\,12}$ und die Reibungskraft zwischen dem Trägerrohr 1 und dem Keil 12 sich aus dem Produkt der Normalkraft $Fn_{1,12}$ und dem Reibungskoeffizienten $\mu_{1,12}$ ergibt. Um ein sicheres Verklemmen des Trägerrohres 1 in der ausgefahrenen Stellung zu gewährleisten, sollte die Reibungskraft zwischen dem Trägerrohr 1 und dem Keil 12 stets größer sein als die Reibungskraft zwischen der Hülse 11 und dem Keil 12. Ist dies sichergestellt, wird der Keil 12 bei Kraftausübung auf das Trägerrohr in negativer z-Richtung soweit in den sich verjüngenden Raum 14 getrieben, bis das Trägerrohr 1 im Kraftschluss mit der Hülse 11 liegt.

Die Reibungskoeffizienten können durch entsprechende Materialwahl für das Trägerrohr 1, das Klemmelement 12 und die Hülse 11 beeinflusst werden, wobei Verunreinigungen oder ungewollt vorhandene Schmierstoffe die Reibungskoeffizienten ungünstig verändern können.

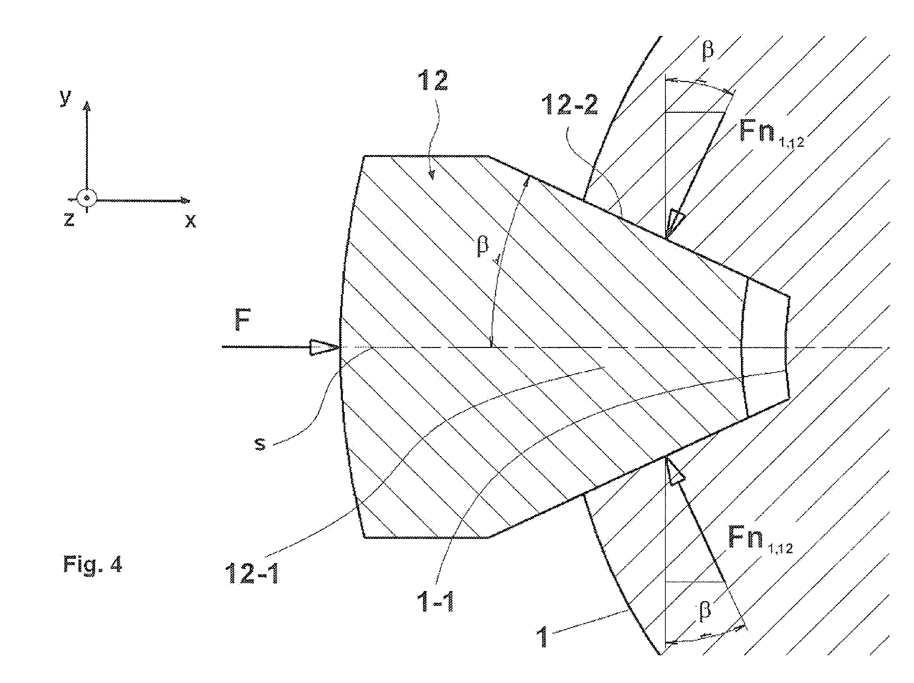

In Fig. 4 ist ein Querschnitt (senkrecht zur z-Richtung) eines Klemmelementes 12 gemäß einer Ausführungsform der Erfindung dargestellt. Wie aus dem Querschnitt ersichtlich ist, umfasst das Klemmelement 12 einen keilförmigen Abschnitt 12-1, der in eine entsprechende keilförmige Nut 1-1 in dem Trägerrohr 1 eingreift. Die nicht parallelen Flanken 12-2 des keilförmigen Abschnitts 12-1 und die Symmetrieachse S des Klemmelementes 12 schließen jeweils einen Winkel β ein. Im verklemmten Zustand bilden die Flanken 12-2 Klemmabschnitte.

Eine in Fig. 3 und 4 gezeigte, durch das Klemmelement 12 von der Hülse 11 auf das Trägerrohr 1 übertragene Kraft F ergibt in Abhängigkeit der Winkel α und β die Normalkräfte $Fn_{11,12}$ und $Fn_{1,12Gesamt}$. Die von der Hülse 11 auf das Klemmelement 12 wirkende Normalkraft $Fn_{11,12}$ ergibt sich unter Berücksichtigung des Winkels α zu

$$F_{n11,12} = \frac{F_1}{\sin\alpha} \qquad (1)$$

wobei gilt:

$$F_1 = F * \tan\alpha \qquad (2)$$

$F_1$ ist hierbei die auf das Klemmelement 12 in negativer z-Richtung ausgeübte Kraft.

Die jeweils an den beiden Kontaktabschnitten 12-2 auf das Trägerrohr 1 wirkende Normalkraft $Fn_{1,12}$ ergibt sich unter Berücksichtigung des Winkels β zu

$$F_{n1,12} = \frac{0,5F}{\sin\beta} \qquad (3)$$

Die beiden Normalkräfte $Fn_{1,12}$ addieren sich zu einer Gesamtkraft $Fn_{1,12Gesamt}$, die der Kraft F in den Gleichungen (1) bis (3) entspricht. Damit $Fn_{11,12}$ immer kleiner als $Fn_{1,12Gesamt}$ ist, muss folgende Beziehung für die beiden Winkel α und β gelten:

$$\sin\beta < \cos\alpha \qquad (4)$$

Hieraus wird ersichtlich, dass durch geeignete Wahl der Winkel α und β dafür gesorgt werden kann, dass $Fn_{1,12Gesamt}$ immer größer als $Fn_{11,12}$, ist, was bei der Verklemmung dazu führt, dass eine Relativbewegung zwischen dem Trägerrohr 1 und dem Klemmelement 12 auch dann unterbunden ist, wenn eine relative Bewegung zwischen dem Klemmelement 12 und der Hülse 11 noch möglich ist. Dieses Prinzip der Klemmkraftverstärkung bewirkt ein sicheres Verklemmen der Überrollkörpers selbst bei für die Verklemmung nachteiliger Beeinflussung der Reibungskoeffizienten zwischen Hülse 11, Klemmelement 12 und Trägerrohr 1.

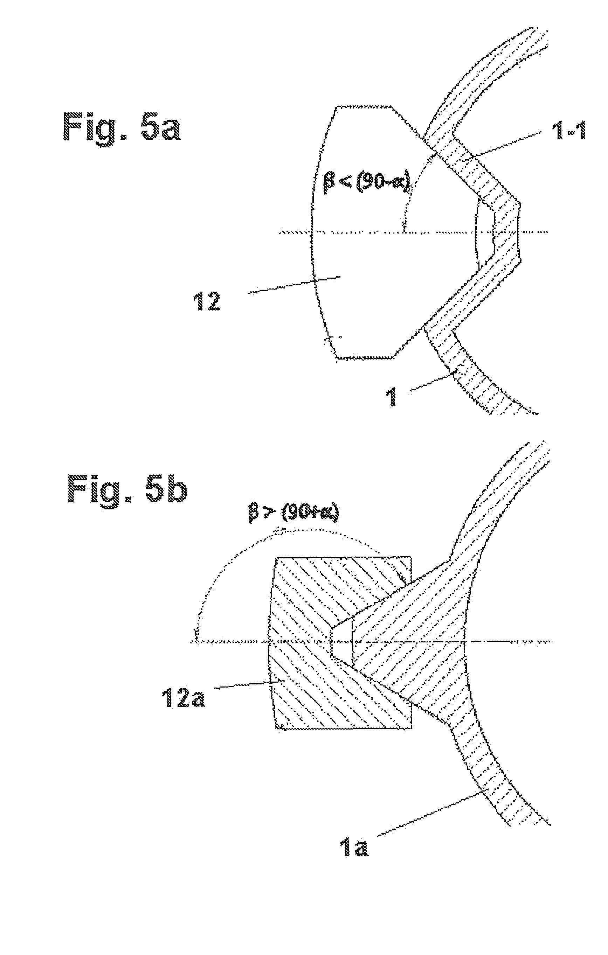

Wie in Fig. 5a dargestellt, ist die Gleichung (4) für Winkel β < 90°-α erfüllt, Aus Symmetriegründen gilt dies auch dann (siehe Fig. 5b), wenn dass Klemmelement 12a eine keilförmige Nut aufweist, die kraftschlüssig mit einem am Trägerrohr 1 vorgesehene keilförmigen Vorsprung verbunden ist. In diesem Fall ist β > 90°+α, damit Gleichung (4) erfüllt ist.

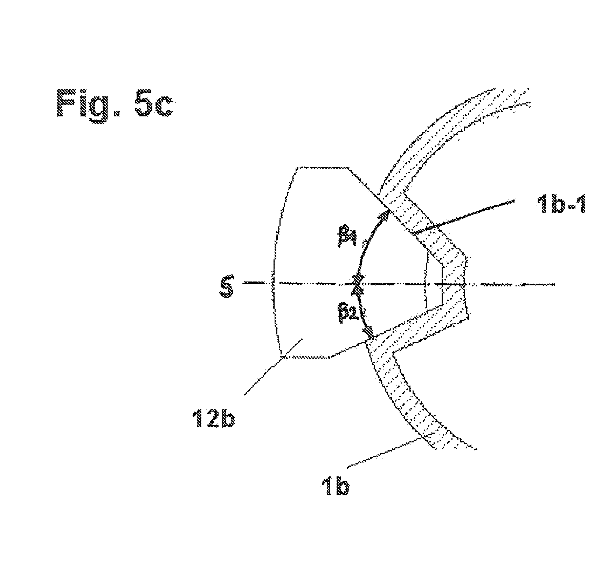

In Fig. 5c ist der Fall dargestellt, dass die Flanken des Klemmelements 12b asymmetrisch ausgebildet sind, d.h. die in Fig. 5c dargestellte obere Flanke schließt mit der Achse S einen Winkel $β_1$ ein, während die untere Flanke mit der Achse S einen Winkel $β_2$ einschließt, Um eine wirkungsvolle Verklemmung zu erzielen, muss der Winkel $β_1$<90°-α und der Winkel $β_2$<90°-α sein. Falls das Klemmelement eine asymmetrisch ausgebildete Nut aufweist, die kraftschlüssig mit einem am Trägerrohr vorgesehenen Vorsprung verbunden ist (ähnlich der Situation in Fig. 5b), gilt für den Winkel $β_1$>90°+α und für den Winkel $β_2$>90°+α,

Bei den in Fig. 4, Fig. 5a, Fig. 5b und Fig. 5c dargestellten Geometrien befindet sich das Klemmelement 12, 12a, 12b an mindestens zwei Klemmabschnitten im formschlüssigen Klemmeingriff mit dem Trägerrohr 1, 1a, 1b. Die Wirklinien der jeweils an den Klemmabschnitten (Flanken) auftretenden Normalkräfte verlaufen dabei nicht durch die Achse des Trägerrohres 1, 1a, 1b, Lediglich die aus den Normalkräften resultierende Gesamtkraft $Fn_{1,22Gesamt}$ schneidet die Trägerrohrachse.

Wird bei diesem Übersetzungsverhältnis die Kraft auf den ausgefahrenen Überrollkörper immer weiter erhöht, tritt in Abhängigkeit des Material und des Querschnitts des Trägerrohres ab einer gewissen Belastung eine Verformung des Trägerrohres und/oder des Klemmelementes auf. Vorteilhaft an dieser Verformung ist die damit einhergehende Energieabsorption. Bei einem starken auf den Überrollkörper wirkenden Stoß wird dieser durch die materialabhängige elastische und die sich daran anschließende plastische Verformung abgefedert, wodurch Überbelastungen von Bauelementen des Überrollbügels, die im Kraftfiuss liegen, vermieden werden können.

Die Geometrie des Trägerrohres 1, 1a, 1b bzw. des Klemmelementes 12, 12a, 12b ist nicht auf die in Fig. 4, Fig. 5a, Fig. 5b und Fig. 5c gezeigten Geometrien beschränkt. Im Folgenden werden weitere Geometrien des Klemmelementes und des Trägerrohres erläutert.

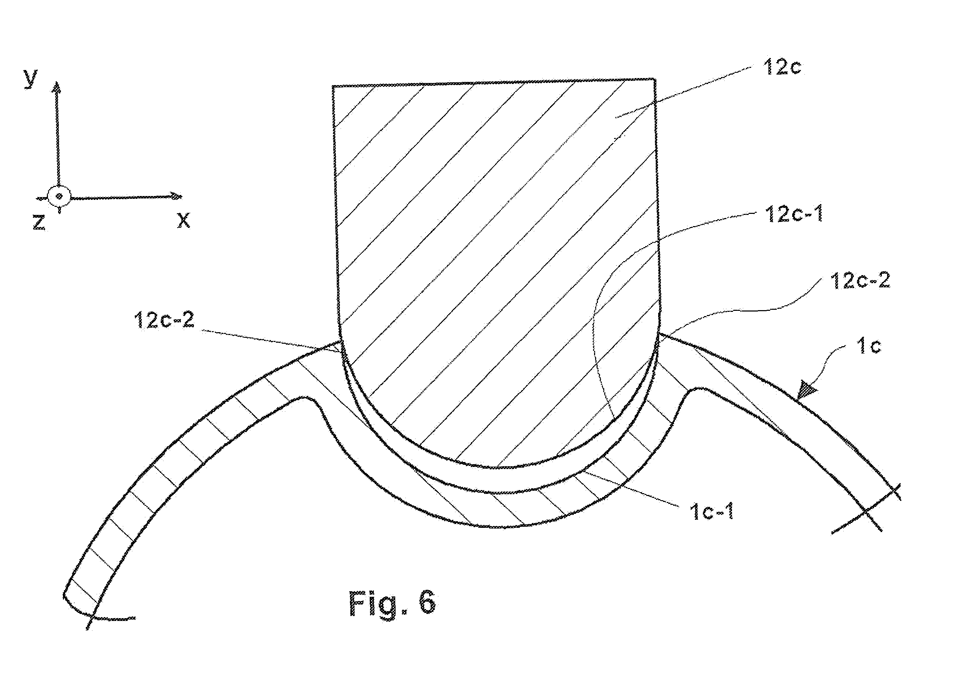

Fig. 6 zeigt eine senkrecht zur z-Richtung verlaufende Schnittansicht einer Klemmelement/Trägerrohr-Kombination. Das Klemmelement 12c umfasst in dieser Ausführungsform auf seiner Rohrseite einen konvexen Abschnitt 12c-1, über den das Klemmelement 12c an dem Trägerrohr 1c anliegt. Als Gegenstück zu dem konvexen Abschnitt 12c-1 ist in dem Trägerrohr 1c eine konkave Nut 1c-1 gebildet. Die konkave Nut 1c-1 liegt dabei lediglich an zwei Klemmabschnitten 12c-2 des Klemmelements 12c an. Dies wird dadurch erreicht, dass der Krümmungsradius der Nut 1c-1 kleiner ist als der Krümmungsradius des konvexen Abschnitts 12c-1 des Klemmelementes 12c. Somit gibt es zwei längs der z-Achse verlaufende linienförmige Kontaktabschnitte zwischen dem Klemmelement 12c und dem Trägerrohr 1c, wobei die Wirklinien der Normalkräfte nicht die Achse des Trägerrohres 1c schneiden.

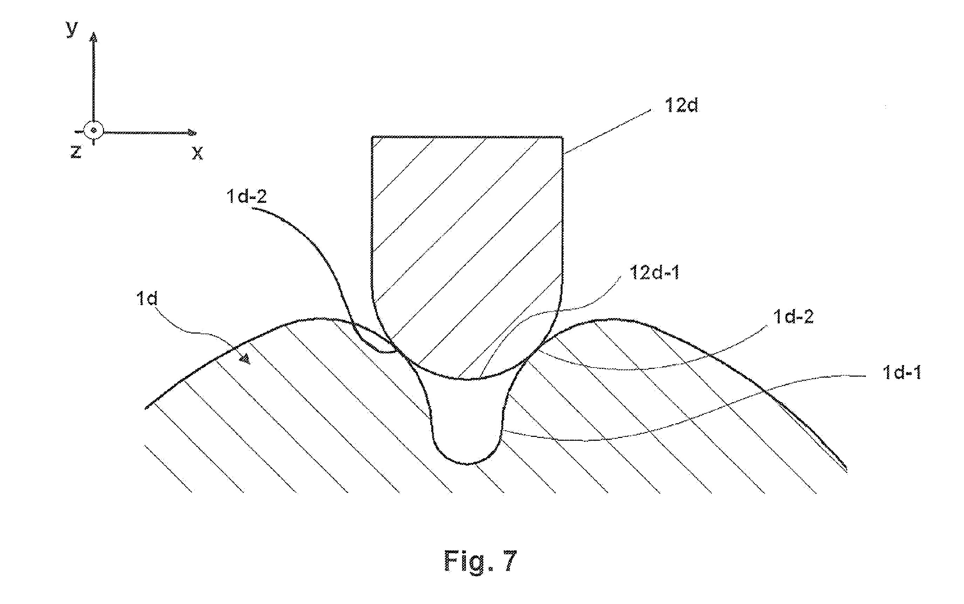

Fig. 7 zeigt eine weitere Kombination eines Klemmelementes 12d und eines Trägerrohres 1d im Querschnitt senkrecht zur z-Richtung. In dem Trägerrohr 1d ist eine Nut 1d-1. ausgebildet, in die das Klemmelement 12d mit seinem konvexen Abschnitt 12d-1 eingreift. Im Unterschied zu der in Fig. 6 gezeigten Ausführungsform weist die Nut 1d-1 zwei randseitig konvexe Abschnitte 1d-2 auf, an die der konvexe Abschnitt 12d-1 des Klemmelements 12d anliegt. Somit gibt es zwischen dem Klemmelement 12d und dem Trägerrohr 1d bzw. der Nut 1d-1 zwei in z-Richtung verlaufende linienförmige Kontakte, wobei die Wirklinien der in Normalenrichtung wirkenden Kontaktkräfte nicht die Achse des Trägerrohres 1 schneiden, sondern nur die aus ihnen resultierende Gesamtnormalkraft.

Vorteilhaft an dieser Ausgestaltung des Klemmelementes 12d und der Nut 1d-1 ist, dass Fertigungstoleranzen dadurch gut ausgeglichen werden können. Ein weiterer Vorteil dieser Klemmelement/Nut-Kombination ist, dass bei übermäßiger Kraftausübung auf den Überrollkörper der Linienkontakt durch Hertzsche Pressung in einen Flächenkontakt übergeht und damit die oben erläuterte plastische Verformung auftritt.

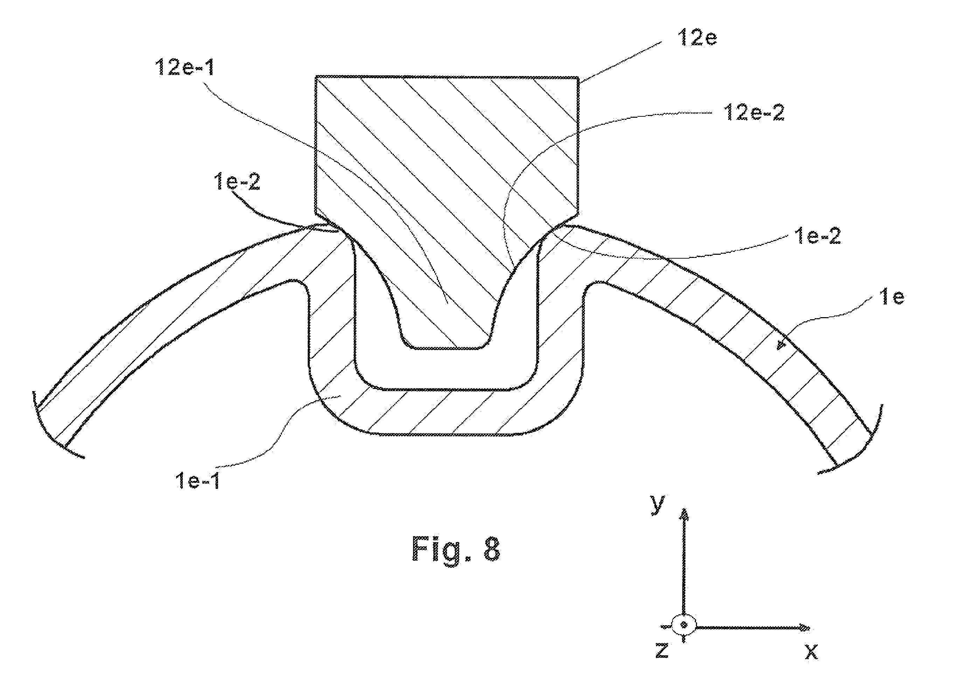

In Fig. 8 ist noch eine weitere Ausgestaltung eines Klemmelementes 12e und eines Trägerrohres 1e im Querschnitt senkrecht zu z-Richtung dargestellt. In dem Trägerrohr 1e ist wiederum eine Nut 1e-1 gebildet, in die das Klemmelement 12e eingreift. Die Nut 1e-1 weist in dieser Ausgestaltung einen rechteckigen Querschnitt auf, wobei zumindest die sich an den Außenumfang des Trägerrohres 1e anschließenden Bereiche 1e-2 der Nut 1e-1 konvex ausgebildet sind. Das Klemmelement 12e umfasst einen Abschnitt 12e-1 auf seiner Rohrseite, der zwei konkave Abschnitte 12e-2 aufweist, die in Eingriff mit den konvexen Abschnitten 1e-2 der Nut 1e-1 gebracht werden. Die Wirklinien der Normalkräfte, die auf den Kontaktflächen auftreten, verlaufen wiederum nicht durch die Achse des Trägerrohres 1e.

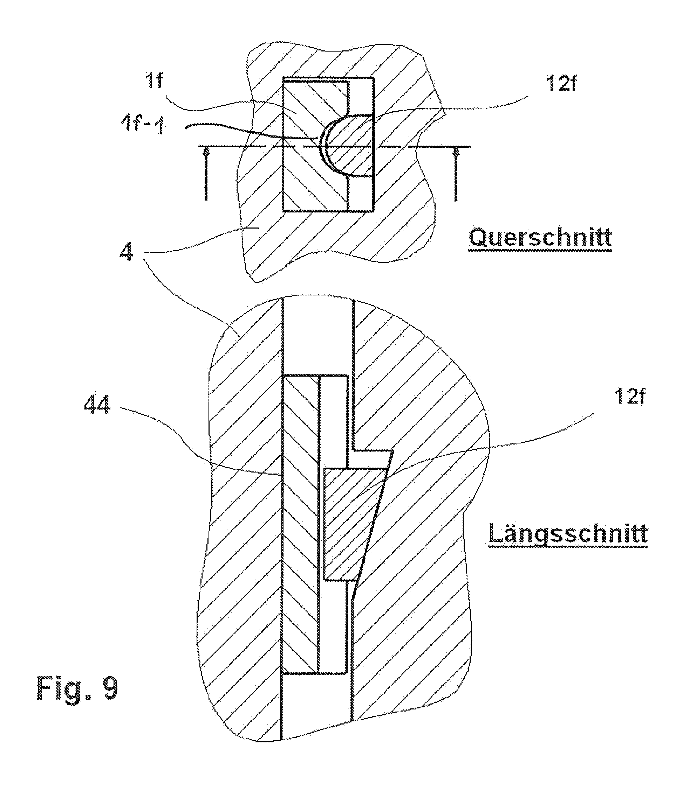

In Fig. 9 ist ein Längsschnitt entlang der z-Richtung und ein Querschnitt entlang der angedeuteten Linie einer Ausführungsform des Trägerrohres 1f als Flachprofil gezeigt. Wie in Fig. 6 ist in dem Flachprofil eine Nut 1f-1 mit konvexen Profil gebildet, in die ein Klemmelement 12f eingreift, In dem Längsschnitt in Fig. 9 ist das Flachprofil nur schematisch über eine zur Erläuterung benötigte Länge in dem Aufnahmeelement 4 dargestellt.

Unter Berücksichtigung der vorher erläuterten Wirkungsweise des Klemmmechanismus ist ersichtlich, dass das Flachprofil 1f bei Krafteinwirkung auf den Überrollkörper in negativer z-Richtung zwischen der Begrenzung 44 des Aufnahmeelementes 4 und dem Klemmelement 12f festgeklemmt wird. Auch in dieser Ausgestaltung schneiden die Wirklinien der Kontaktkräfte (Normalkräfte auf die Tangentialebene der konvexen Kontaktabschnitte) nicht die Achse des Flachprofils 1f.

In den vorhergehend erläuterten Figuren ist das Trägerrohr mit einem kreisförmigen bzw. rohrförmigen Querschnitt dargestellt. Das Trägerrohr ist auf eine solche Ausgestaltung nicht beschränkt, sondern kann auch andere Querschnittsformen aufweisen. Nicht abschließende Beispiele hierfür sind Voll- oder Hohlquerschnittsformen, die rund, oval, elliptisch, rechteckig oder quadratisch sind. Finden Hohlquerschnitte Verwendung, werden diese bevorzugt als Strangpressprofile ausgebildet.

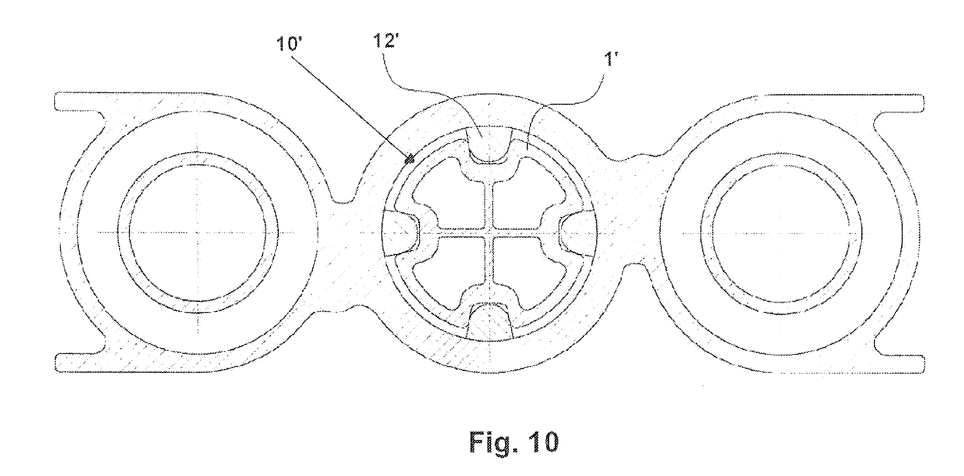

In Fig. 10 ist eine Schnittansicht des in Fig. 2 gezeigten Überrollbügels senkrecht zur z-Richtung auf Höhe des Klemmmechanismus 10' gezeigt. Wie oben erwähnt und hieraus ersichtlich, weist der Klemmmechanismus 10' mehrere Klemmelemente 12' in gleichen Winkelabständen auf, die in entsprechende Nuten des Trägerrohres 1' eingreifen. Die in Fig. 10 dargestellte Klemmelement/Nut-Kombination entspricht der aus Fig. 6. Die Geometrie der Klemmelement/Nut-Kombination kann aber auch derjenigen entsprechen, die in einer der Fig. 5 und Fig. 7 bis Fig. 9 gezeigt ist. Durch die Mehrzahl von Klemmelementen 12' kann die Sicherheit einer zuverlässigen Verklemmung weiter erhöht werden, weil bei einer Fehlfunktion eines Klemmelementes 12' die übrigen Klemmelemente für eine hinreichende Verklemmung sorgen. Auf Grund der Kraftübersetzung der Normalkräfte werden aber ohnehin Fehlfunktionen des Klemmmechanismus 10' weitestgehend vermieden. Die Anzahl der Klemmelemente und Nuten kann je nach Bedarf gewähr werden.

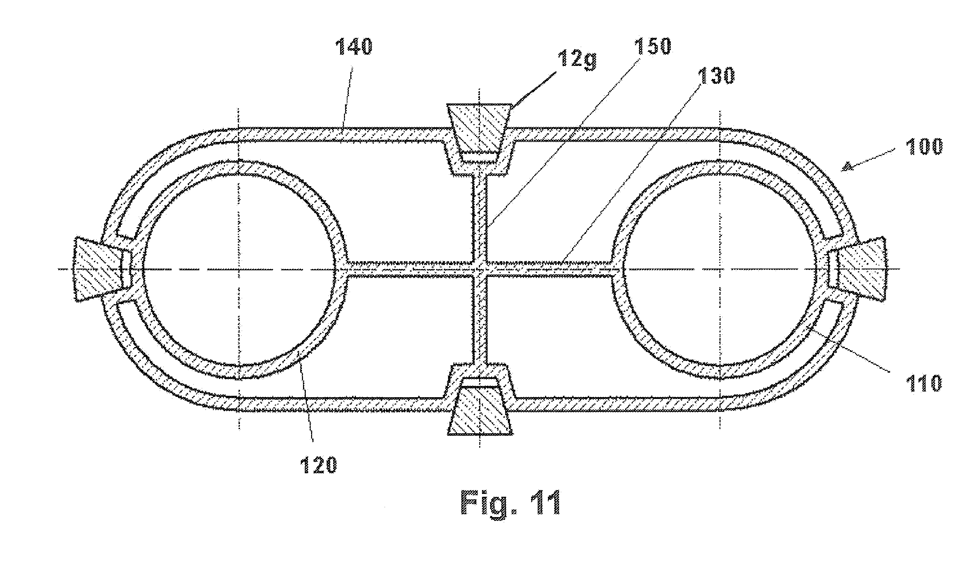

Fig. 11 zeigt eine weitere Ausführungsform eines Überrollschutzes in einer Schnittansicht senkrecht zur z-Richtung. Im Gegensatz zur Ausführungsform der Fig. 10, bei der das Trägerrohr mittels zweier Führungsrohre in eine ausgefahrene Stellung gebracht und mittels eines Klemmmechatiismus in der ausgefahrenen Stellung verklemmt wird, ist ein vorzugsweise einteilig als Strangpressprofil ausgebildetes Trägersystem 100 vorgesehen, das mehrere Funktionen erfüllt. Zum einen umfasst das Trägersystem 100 zwei rohrförmige Elemente 110, 120, welche eine geführte Bewegung des gesamten Trägersystems in die ausgefahrene Stellung sicherstellen. Die Elemente 110, 120 sind starr über einen in der Fig. 11 horizontal verlaufenden Steg 130 miteinander verbunden. Zum anderen umfasst das Trägersystem 100 ein Trägerrohr 140, das einen länglich ovalen Querschnitt senkrecht zur z-Richtung aufweist. Die Längsseiten des Trägerrohres 140 sind starr über einen in der Fig. 11 vertikal verlaufenden Steg 150 miteinander verbunden. Das Trägerrohr 140 weist außenseitig in jeweils gleichem Abstand Nuten auf, die mit an entsprechender Stelle vorgesehenen Klemmelementen 12g im verklemmten Zustand kraftschlüssig verbunden sind. Um das gesamte Trägersystem 100 in die ausgefahrene Stellung zu bringen, sind innerhalb der rohrförmigen Elemente 110, 120 nicht dargestellte Antriebsmittel vorgesehen. Solche Antriebsmittel können dem in Fig. 1 gezeigten pyrotechnischen Aktuator 3 oder der in Fig. 2 gezeigten Feder 3' entsprechen.

Die Geometrie der in Fig. 11 dargestellten Nuten und Klemmelemente ist rein beispielhaft und kann auch einer der in den Fig. 5 bis Fig. 9 dargestellten Geometrien entsprechen. So kann beispielsweise das Klemmelement 12g selbst eine Nut aufweisen, in die ein am Außenumfang des Trägerrohres 140 vorgesehener keilförmiger Vorsprung eingreift.

Mit Ausnahme der Fig. 5c weisen die in den übrigen Figuren dargestellten Klemmelemente und Nuten Symmetrieachsen in einer zur z-Richtung senkrecht stehenden Ebene auf. Daraus ergibt sich, dass die aus den einzelnen Normalkräften resultierende Gesamtnormalkraft die Achse des Trägerrohres schneidet. Die Erfindung ist allerdings nicht auf derartige Geometrien beschränkt.

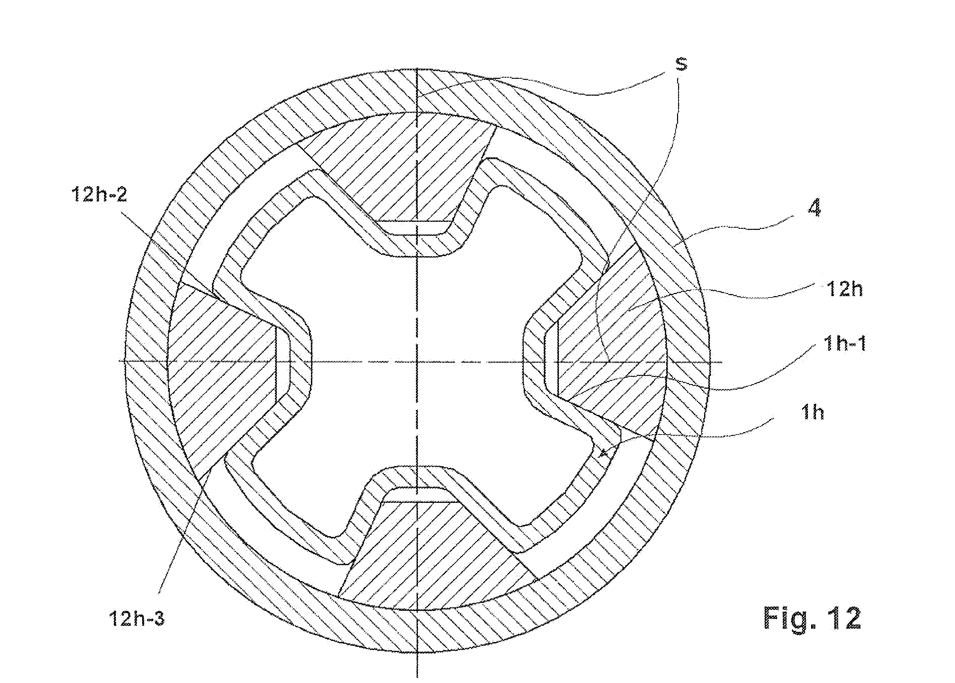

Fig. 12 zeigt einen Querschnitt senkrecht zur z-Richtung durch einen Klemmmecharismus, bei dem sowohl die Klemmelemente 12h als auch die entsprechenden Nuten 1h-1 in dem Trägerrohr 1h in dieser Schnittebene nicht achsensymmetrisch sind. Die Flanken 12h-2 der Klemmelemente 12h weisen einen kleineren Neigungswinkel auf als die Flanken 12h-3. Dadurch ergibt sich aus den jeweiligen Normalkräften, die an den Flanken 12h-2, 12h-3 auftreten, eine resultierende Gesamtnormalkraft, deren Wirklinie nicht durch die Achse des Trägerrohrs 1h verläuft. Durch die asymmetrische Ausbildung der Klemmelemente 12h wird folglich beim Verklemmen ein Drehmoment auf das Trägerrohr 1h übertragen, das bei einer entsprechend ausgebildeten Aufnahme zum Aufnehmen des Trägerrohres 1h zusätzlich zum Verklemmen des Trägerrohres 1h beiträgt.

Wie aus der vorherigen Beschreibung ersichtlich wird, kann ein Klemmmechanismus, insbesondere für einen Überrollschutz für ein Kraftfahrzeug mit ausfahrbarem Überrollkörper geschaffen werden, der auch bei ungewollt in dem Klemmmechanismus vorhandenen Verunreinigungen bzw, Schmierstoffen den ausgefahrenen Überrollkörper zuverlässig verklemmen kann.

Weiterhin vorteilhaft an dem Klemmmechanismus ist, dass eine in Bezug auf mechanische Eigenschaften vorteilhafte, aber in Bezug auf Reibungskoeffizienten ungünstige Materialkombination für die Elemente des Klemmmechanismus 10, d.h. die Hülse 11 bzw. den sich verjüngenden Abschnitt 8', das Klemmelement 12 und den zu verklemmenden Körper 1, gewählt werden kann, ohne dass das Risiko einer Fehlfunktion des Klemmmechanismus besteht.

Ferner kann durch den Klemmmechanismus eine durch einen starken Aufprall ausgeübte Kraft durch den Klemximechanismus gedämpft werden, indem eine plastische Verformung des Überrollkörpers am Kraftschluss auftritt.

**Patentansprüche**

1. Klemmmechanismus (10) zum Verklemmen eines linear beweglichen Körpers (1), umfassend eine Aufnahme (4, 4') zur Aufnahme des Körpers (1) und mindestens ein Klemmelement (12, 12'), das eine Vielzahl von Klemmabschnitten aufweist, wobei die Aufnahme (4, 4') einen keilförmigen Raum (14, 14') festlegt und die Klemmabschnitte des Klemmelements (12, 12') beim Verklemmen des Körpers (1) in Klemmeingriff mit dem Körper (1) und dem keilförmigen Raum (14, 14') treten, und das Klemmelement (12, 1.2') derart ausgebildet und in dem keilförmigen Raum (14, 14') gelagert ist, dass das Klemmelement (12, 12') beim Verklemmen des Körpers (1) Klemmkräfte in Normalenrichtung auf den Körper (1) ausübt, die sich zu einer resultierenden Gesamtkraft addieren, deren Betrag größer ist als der Betrag derjenigen Kraft, die in Normalenrichtung von dem keilförmigen Raum (14, 14') auf das Klemmelement (12, 12') ausgeübt wird.

2. Klemmmechanismus (10) nach Anspruch 1, wobei das Klemmelement (12) mindestens zwei Klemmabschnitte (12-2) aufweist, die beim Verklemmen des Körpers (1) in Eingriff mit einer an dem Körper (1) vorgesehenen Klemmnut (1-1) gebracht werden.

3. Überrollschutz, insbesondere für ein Kraftfahrzeug, umfassend:

   einen Überrollkörper (1, 2), der in einer Ausfahrrichtung von einer eingefahrenen Stellung in eine ausgefahrene Stellung verschiebbar ist, und
   einen Klemmmechanismus (10), welcher eine Aufnahme (4, 4') zur Aufnahme des Überrollkörpers (1, 2) und mindestens ein Klemmelement (12, 12'), das eine Vielzahl von Klemmabschnitten aufweist umfasst, wobei die Aufnahme (4, 4') einen keilförmigen Raum (14, 14') festlegt und die Klemmabschnitte des Klemmelements (12, 12') beim Verklemmen des Überrollkörpers (1, 2) in Klemmeingriff mit dem Überrollkörper (1, 2) und dem keilförmigen Raum (14, 14') treten, und das Klemmelement (12, 12') derart ausgebildet und in dem keilförmigen Raum (14, 14") gelagert ist, dass das Klemmelement (12, 12') beim Verklemmen des Überrollkörpers (1, 2) Klemmkräfte in Normalenrichtung auf den Überrollkörper (1, 2) ausübt, die sich zu einer resultierenden Gesamtkraft addieren, deren Betrag größer ist als der Betrag derjenigen Kraft, die in Normalenrichtung von dem keilförmigen Raum (14, 14') auf das Klemmelement (12, 12') ausgeübt wird.

4. Überrollschutz nach Anspruch 3, wobei das Klemmelement (12) mindestens zwei Klemmabschnitte (12-2) aufweist, die beim Verklemmen des Überrollkörpers (1, 2) in Klemmeingriff mit einer an dem Überrollkörper (1, 2) vorgesehenen Klemmnut (1-1) gebracht werden.

5. Überrollschutz nach Anspruch 4, wobei der Klemmeingriff der Klemmabschnitte (12-2) des Klemmelements (12) mit der Klemmnut (1-1) derart ist, dass Wirklinien der in Normalenrichtung auf den Überrollkörper (1, 2) wirkenden Klemmkräfte nicht parallel verlaufen.

6. Überrollschutz nach einem der Ansprüche 4 oder 5, wobei der Überrollkörper eine Symmetrieachse aufweist und der Klemmeingriff der Klemmabschnitte (12-2) des Klemmelements (12) mit der Klemmnut (1-1) derart ist, dass eine Resultierende der in Normalenrichtung auf den Überrollkörpers (1, 2) wirkenden Klemmkräfte durch die Symmetrieachse des Überrollkörpers (1, 2) verläuft.

7. Überrollschutz nach einem der Ansprüche 3 bis 6, wobei das Klemmelement ein Klemmkeil (12, 12') ist und der keilförmige Raum (14, 14') entgegengesetzt zur Ausfahrrichtung des Überrollkörpers (1, 2) verjüngt ausgebildet ist.

8. Überrollschutz nach einem der Ansprüche 4 bis 7, wobei der Klemmeingriff formschlüssig ist.

9. Überrollschutz nach einem der Ansprüche 4 bis 8, wobei der Überrollkörper ein entlang der Ausfahrrichtung verlaufendes Trägerrohr (1) aufweist, das die Klemmnut (1-1) aufweist, wobei beim Verklemmen des Trägerrohrs (1) die Klemmnut (1-1) an mindestens zwei Punkten, Linien oder Flächen in Klemmeingriff mit dem Klemmkeil (12) gebracht wird.

10. Überrollschutz nach Anspruch 9, wobei der Klemmkeil (12c) einen konvexen Abschnitt (12c-1) und die Klemmnut (1c-1) des Trägerrohrs (1c) einen konkav ausgebildeten Abschnitt aufweist, und wobei der Krümmungsradius der Klemmnut (1c-1) kleiner als der Krümmungsradius des Klemmkeils (12c) ist.

11. Überrollschutz nach Anspruch 9, wobei der Klemmkeil (12d) einen konvexen Abschnitt (12d-1) und die Klemmnut (1d-1) des Trägerrohrs (1d) zwei die Klemmnut (1d-1) seitlich begrenzende konvexe Nutabschnitte (1d-2) aufweist.

12. Überrollschutz nach Anspruch 9, wobei der Klemmkeil (12e) zwei konkave Abschnitte (12e-2) und die Klemmnut (1e-1) des Trägerrohrs (1e) zwei die Klemmnut (1e-1) seitlich begrenzende konvexe Nutabschnitte (1e-2) aufweist.

13. Überrollschutz nach einem der Ansprüche 9 bis 12, wobei der Klemmkeil (12h) und das Trägerrohr (1h) in einer Ebene senkrecht zur Achse des Trägerrohrs (1h) keine Achsensymmetrie aufweisen.

14. Überrollschutz nach Anspruch 13, wobei die Flanken (12h-2, 12h-3) des Klemmkeils (12h) unterschiedliche Neigungswinkel in einer Ebene senkrecht zur Achse des Trägerrohrs (1h) aufweisen,

15. Überrollschutz nach einem der Ansprüche 9 bis 14, wobei das Trägerrohr (1) einen runden, ovalen, rechteckigen oder quadratischen Querschnitt aufweist.

Fig. 1

Fig. 2

EP 2 216 210 A2

Hülse 11    Keil 12    Bügelrohr 1

14

α

B

A

F

$F_1$

α

$Fn_{11,12}$

$F = Fn_{1,12\ Gesamt}$

z

x

Fig. 3

Fig. 4

Fig. 5a

β < (90-α)

1-1

12

1

Fig. 5b

β > (90+α)

12a

1a

Fig. 5c

Fig. 6

Fig. 7

EP 2 216 210 A2

Fig. 8

EP 2 216 210 A2

1f     12f

1f-1

4

Querschnitt

44     12f

Längsschnitt

Fig. 9

Fig. 10

Fig. 11

Fig. 12

EP 2 216 210 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4342401 A1
- DE 19523790 A1

- DE 19750457 A1